## Europäisches Patentamt

## European Patent Office

## Office européen des brevets

(11) Veröffentlichungsnummer: **0 155 557**
**A1**

(12) # EUROPÄISCHE PATENTANMELDUNG

(21) Anmeldenummer: 85102173.3

(22) Anmeldetag: 27.02.85

(51) Int. Cl.⁴: **C 09 J 3/14**
**C 09 J 7/02**

(30) Priorität: 28.02.84 DE 3407279

(43) Veröffentlichungstag der Anmeldung:
25.09.85 Patentblatt 85/39

(84) Benannte Vertragsstaaten:
AT BE CH DE FR GB IT LI LU NL SE

(71) Anmelder: Gebrüder Kömmerling Kunststoffwerke
GmbH
Zweibrückerstrasse 200
D-6780 Pirmasens(DE)

(72) Erfinder: Kröher, Peter
Ringstrasse 78
D-6780 Pirmasens(DE)

(74) Vertreter: Marx, Lothar, Dr. et al,
Dipl.-Ing. Schwabe, Dr. Dr. Sandmair Dipl.-Phys. Dr. Marx
Stuntzstrasse 16
D-8000 München 80(DE)

(54) Selbstklebende, redispergierbare Klebstoffmischung und sie enthaltende selbstklebende Folie zum Schutz empfindlicher Oberflächen.

(57) Selbstklebende, redispergierbare Klebstoffmischung, die enthält:

a) 40 bis 70 Gew.−%, bezogen auf das Gesamtgewicht der Klebstoffmischung, einer wäßrigen Dispersion mit einem Feststoffgehalt von 40 bis 70 Gew.−% von

aa) einem Terpolymeren aus
30 bis 70 Gew.−% eines oder mehrerer Ester von (Meth)-Acrylsäure und einem Alkohol mit 4 bis 12 Kohlenstoffatomen,
20 bis 55 Gew.−% Vinyläther oder Vinylester, vorzugsweise Vinylacetat, und
10 bis 30 Gew.−% Ethylen und/oder

ab) einem Terpolymeren aus
50 bis 85 Gew.−% eines oder mehrerer Ester von (Meth)-Acrylsäure und einem Alkohol mit 4 bis 12 Kohlenstoffatomen,
8 bis 12 Gew.−% (Meth)Acrylnitril und
2 bis 6 Gew.−% (Meth)Acrylsäure und/oder

ac) einem Copolymeren aus
30 bis 70 Gew.−% eines oder mehrerer Ester von (Meth)-Acrylsäure und einem Alkohol mit 4 bis 12 Kohlenstoffatomen und
30 bis 70 Gew.−% Vinylacetat;

b) 5 bis 15 Gew.−%, bezogen auf das Gesamtgewicht der Klebstoffmischung, von

ba) einer Mischung von Polyvinylpyrrolidon mit einem k-Wert von 50 bis 60 und einem mehrwertigen wasserlöslichen Alkohol im Gewichtsverhältnis 95 : 5 bis 70 : 30 und/oder

bb) einem Copolymeren von Vinylmethyläther und Maleinsäureanhydrid mit einem Schmelzbereich von 200 bis 225°C und oder

bc) einem Polyvinylmethyläther mit einem k-Wert von 40 bis 60.

c) 0,1 bis 2 Gew.−%, bezogen auf das Gesamtgewicht der Klebstoffmischung, eines anionischen und/oder nichtionischen Tensids;

d) 0,1 bis 5 Gew.−%, bezogen auf das Gesamtgewicht der Klebstoffmischung, übliche Zusätze; und

e) 10 bis 40 Gew.−% Wasser,

sowie eine diese enthaltende selbstklebende Folie zum Schutz empfindlicher Oberflächen, insbesondere lackierter Metalloberflächen oder Kunststoffoberflächen, insbesondere Kunststoffprofilen, der speziell beim Transport, bei der Lagerung und Konfektionierung derselben wichtig ist.

Croydon Printing Company Ltd

## Beschreibung

Die Erfindung betrifft eine selbstklebende, redispergierbare
Klebstoffmischung sowie eine diese enthaltende selbstklebende
Folie zum Schutz empfindlicher Oberflächen, insbesondere lackierter Metalloberflächen oder Kunststoffoberflächen, insbesondere
Kunststoffprofilen, der speziell beim Transport, bei der Lagerung
und Konfektionierung derselben wichtig ist.

Empfindliche Oberflächen, insbesondere Kunststoffprofile, weisen oft einen schützenden Lacküberzug auf, bei dem es sich meistens um einen Acrylatlack handelt, der vorzugsweise aus organischer Lösungsmittelphase aufgebracht worden ist. Da der Lacküberzug in der Regel unmittelbar nach dem Durchlaufen des Trocknungsprozesses mit einer Schutzfolie abgedeckt wird, enthält er
zu diesem Zeitpunkt noch einen Rest-Lösungsmittelgehalt von etwa 5 bis 7 %. Die bisher zu diesem Zweck verwendeten Schutzklebebänder werden von dem in dem Lacküberzug enthaltenen organischen
Rest-Lösungsmittel in ihrer Kohäsion so geschwächt, daß beim späteren Abziehen des Schutzklebebandes teilweise ein Übertrag auf
die Lackierung stattfindet. Die dadurch erforderliche anschliessende Reinigung der mit Klebstoff verunreinigten Lackoberfläche
ist wiederum nur mit einem organischen Lösungsmittel möglich,
das selbst die Lackierung stark angreift.

Auch dann, wenn die bekannten Schutzklebebänder, deren Klebstoffschicht aus einer organischen Lösungsmittelphase oder aus
der Schmelze aufgebracht worden ist, auf unlackierte Kunststoffprofile aus beispielsweise Hart-Polyvinylchlorid aufgebracht werden, tritt ein partieller Klebstoffübertrag nach längerer Lagerung
der geschützten Profile auf. Auch in diesem Falle kann durch die
sich daran anschließende Reinigung mit den erforderlichen organischen Lösungsmitteln eine starke Schädigung der Profiloberfläche auftreten, da mit den organischen Reinigungsmitteln viele Stabilisatoren, vornehmlich UV-Absorber, aus der Profiloberfläche ausgewaschen werden. Diese unerwünschte Auswaschung von UV-Absorbern führt unter anderem auch zu unerwünschten Farbveränderungen bei der Bewitterung.

Ein weiterer Nachteil der bisher bekannten Klebebänder, die als Schutzfolie zum Schutz empfindlicher Oberflächen eingesetzt werden, ist der, daß vor der eigentlichen Klebstoffbeschichtung ein Primer in einem separaten Arbeitsgang aufgebracht werden muß, der eine innigere Verbindung zwischen Klebstoffüberzug und Träger der Klebefolie herstellen soll.

Aufgabe der Erfindung war es daher, eine Klebstoffmischung zu entwickeln, welche die vorstehend geschilderten Nachteile nicht aufweist, sich insbesondere eignet zur Herstellung einer selbstklebenden Folie, mit deren Hilfe es möglich ist, empfindliche Oberflächen, speziell lackierte Kunststoffprofile, beim Transport, bei der Lagerung und Konfektionierung wirksam zu schützen.

Es wurde nun gefunden, daß diese Aufgabe erfindungsgemäß gelöst werden kann durch eine selbstklebende, redispergierbare Klebstoffmischung der nachstehend angegebenen Zusammensetzung und deren Verwendung zur Herstellung einer selbstklebenden Folie, die empfindliche Oberflächen, insbesondere lackierte Metall- und Kunststoffoberflächen, speziell Kunststoffprofile, wirksam schützt.

Gegenstand der Erfindung ist eine selbstklebende, redispergierbare Klebstoffmischung, die dadurch gekennzeichnet ist, daß sie enthält:

a) 40 bis 70 Gew.-%, bezogen auf das Gesamtgewicht der Klebstoffmischung, einer wäßrigen Dispersion mit einem Feststoffgehalt von 40 bis 70 Gew.-% von

    aa) einem Terpolymeren aus

30 bis 70 Gew.-% eines oder mehrerer Ester von (Meth)-Acrylsäure und einem Alkohol mit 4 bis 12 Kohlenstoffatomen,

20 bis 55 Gew.-% Vinyläther oder Vinylester, vorzugsweise Vinylacetat und

10 bis 30 Gew.-% Ethylen und/oder

ab) einem Terpolymeren aus

50 bis 85 Gew.-% eines oder mehrerer Ester von (Meth)-Acrylsäure und einem Alkohol mit 4 bis 12 Kohlenstoffatomen,

8 bis 12 Gew.-% (Meth)Acrylnitril und

2 bis 6 Gew.-% (Meth)Acrylsäure und/oder

ac) einem Copolymeren aus

30 bis 70 Gew.-% eines oder mehrerer Ester von (Meth)-Acrylsäure und einem Alkohol mit 4 bis 12 Kohlenstoffatomen und

30 bis 70 Gew.-% Vinylacetat;

b) 5 bis 15 Gew.-%, bezogen auf das Gesamtgewicht der Klebstoffmischung, von

ba) einer Mischung von Polyvinylpyrrolidon mit einem k-Wert von 50 bis 60 und einem mehrwertigen wasserlöslichen Alkohol im Gewichtsverhältnis 95 : 5 bis 70 : 30 und/oder

bb) einem Copolymeren von Vinylmethyläther und Maleinsäureanhydrid mit einem Schmelzbereich von 200 bis 225° C und/oder

bc) einem Polyvinylmethyläther mit einem k-Wert von 40 bis 60;

c) 0,1 bis 2 Gew.-%, bezogen auf das Gesamtgewicht der Klebstoffmischung, eines anionischen und/oder nicht-ionischen Tensids;

d) 0,1 bis 5 Gew.-%, bezogen auf das Gesamtgewicht der Klebstoffmischung, übliche Zusätze; und

e) 10 bis 40 Gew.-% Wasser.

Gemäß einer bevorzugten Ausgestaltung der Erfindung enthält die Klebstoffmischung

a) 20 bis 30 Gew.-%, bezogen auf das Gesamtgewicht der Klebstoffmischung, einer wäßrigen Dispersion mit einem Feststoffgehalt von 60 Gew.-% eines Ethylen/Vinylacetat/(Meth)Acrylsäureester-Terpolymeren

b) 20 bis 30 Gew.-%, bezogen auf das Gesamtgewicht der Klebstoffmischung, einer wäßrigen Dispersion mit einem Feststoffgehalt von 50 Gew.-% eines carboxylgruppenhaltigen Vinylacetat/n-Butylacetat-Copolymeren

c) 20 bis 30 Gew.-%, bezogen auf das Gesamtgewicht der Klebstoffmischung, einer 25 bis 50 %igen wäßrigen Lösung eines Polyvinylmethyläthers (k-Wert 50)

d) 0,5 bis 1 Gew.-%, bezogen auf das Gesamtgewicht der Klebstoffmischung, eines Alkylphenolpolyglykoläthers

e) 0,1 bis 0,3 Gew.-%, bezogen auf das Gesamtgewicht der Klebstoffmischung, eines aliphatischen Kohlenwasserstoffs mit hydrophober Si-Verbindung

f) 0,1 bis 0,3 Gew.-%, bezogen auf das Gesamtgewicht der Klebstoffmischung, eines aliphatischen Amids und

g) 20 bis 30 Gew.-%, bezogen auf das Gesamtgewicht der Klebstoffmischung, Wasser.


Gemäß einer besonders bevorzugten Ausgestaltung der Erfindung enthält die Klebstoffmischung

a) 24 Gew.-%, bezogen auf das Gesamtgewicht der Klebstoffmischung, einer wäßrigen Dispersion mit einem Feststoffgehalt von 60 Gew.-% eines Ethylen/Vinylacetat/(Meth)Acrylsäureester-Terpolymeren

b) 23 Gew.-%, bezogen auf das Gesamtgewicht der Klebstoffmischung, einer wäßrigen Dispersion mit einem Feststoffgehalt von 50 Gew.-% eines carboxylgruppenhaltigen Vinylacetat/n-Butylacetat-Copolymeren

c) 25 Gew.-%, bezogen auf das Gesamtgewicht der Klebstoffmischung, einer 25 bis 50 %igen wäßrigen Lösung eines Polyvinylmethyläthers (k-Wert 50)

d) 0,7 Gew.-%, bezogen auf das Gesamtgewicht der Klebstoffmischung, eines Alkylphenolpolyglykoläthers

e) 0,3 Gew.-%, bezogen auf das Gesamtgewicht der Klebstoffmischung, eines aliphatischen Kohlenwasserstoffs mit hydrophober Si-Verbindung

f) 0,25 Gew.-%, bezogen auf das Gesamtgewicht der Klebstoffmischung, eines aliphatischen Amids und

g) 26,75 Gew.-%, bezogen auf das Gesamtgewicht der Klebstoffmischung, Wasser.

Gegenstand der Erfindung ist ferner eine selbstklebende Folie zum Schutz empfindlicher Oberflächen, insbesondere lackierter Metalloberflächen oder Kunststoffoberflächen, speziell von Kunststoffprofilen, die dadurch gekennzeichnet ist, daß sie aus einem üblichen Träger, vorzugsweise Hart-Polyvinylchlorid, Weich-Polyvinylchlorid, Polyester, Polyethylen, Polypropylen, Laminaten untereinander oder auch damit beschichtetem Papier, und mindestens einer darauf aufgebrachten Schicht aus der selbstklebenden, redispergierbaren Klebstoffmischung der vorstehend angegebenen Zusammensetzung besteht.

Die Trägerunterseite weist vorzugsweise eine Trennschicht (Release-Schicht) auf, um den Abrollwiderstand der Klebefolie im üblichen Rahmen zu halten. Sie besteht bevorzugt aus einem polymeren Octadecylvinyläther, aufgebracht in Form einer 5 bis 10-%igen Benzinlösung (Benzinfraktion mit einem Kp. von 60 - 95° C) des polymeren Octadecylvinyläthers in einer Beschichtungsmenge von 1 bis 2 g/m$^2$ Folie.

Die erfindungsgemäße selbstklebende redispergierbare Klebstoffmischung und die sie enthaltende selbstklebende Folie zum Schutz empfindlicher Oberflächen weisen gegenüber den bisher bekannten Schutzklebebändern folgende Vorteile auf:

a) sie nehmen das in einem frisch aufgebrachten Lacküberzug enthaltene organische Rest-Lösungsmittel auf, ohne eine Kohäsionsschwächung im Klebstoffilm hervorzurufen;

b) sie weisen eine ausgewogene Haftung auf der zu schützenden
Lackoberfläche, vorzugsweise Acrylatlack-Oberfläche, auf, wobei
die Haftung so stark ist, daß bei Lagerung der damit überzogenen Profile unter hohem Stapeldruck die Haftung der Schutzfolie
nicht so zunimmt, daß diese bei der anschließenden Verarbeitung
nicht mehr oder nur noch sehr schwer abgezogen werden kann. Die
Haftung ist andererseits aber auch so groß, daß bei der Lagerung
der Kunststoffprofile im Freien die Schutzfolie durch Witterungseinflüsse (Feuchtigkeit, Wind, UV-Anteil der Sonnenstrahlung)
sich nicht von selbst ablöst. Selbst bei intensiver Bewässerung
ist beim Ablösen der Schutzfolie festzustellen, daß der Klebstoff nur an der Kantengrenzfläche anquillt (etwa 1 bis 2 mm)
und dadurch eine Schutzbarriere gegen das weitere Eindringen von
Feuchtigkeit ausbildet;

c) die Haftung der erfindungsgemäßen Klebstoffmischung auf dem
Träger ist höher als gegenüber dem zu schützenden Lack, auch
ohne zusätzliche Verwendung eines Primers, so daß beim Abziehen
der Schutzfolie normalerweise kein Klebstoffübertrag erfolgt,
so daß die Nachbehandlung, insbesondere Reinigung, der freigelegten empfindlichen Oberfläche nicht mehr erforderlich ist;

d) selbst wenn unter bestimmten Umständen ein Übertrag stattfindet, kann der an der zu schützenden Oberfläche nach dem Abzug
der Schutzfolie gegebenenfalls haftende Klebstoff unter Verwendung von Wasser, d.h. ohne Verwendung eines organischen Lösungsmittels, wieder redispergiert und durch Abwischen mit einem
weichen Tuch problemlos entfernt werden. Vorteilhaft ist auch,
daß der erfindungsgemäße Klebstoff, wenn er einmal redispergiert
worden ist, praktisch keinen oder nur einen sehr losen Verbund
mit der abgedeckten Oberfläche wieder eingeht;

e) der Träger der erfindungsgemäßen Klebstoffolie kann aus Hart-
Polyvinylchlorid, Weich-Polyvinylchlorid, einem Polyester, Polyethylen, Polypropylen, einem Laminat aus den genannten Materialien oder auch aus damit beschichtetem Papier bestehen. Vorzugsweise handelt es sich dabei um eine weiß gedeckt eingefärbte Hart-PVC-Folie. Durch die Einfärbung wird eine Sonnenreflexion erzielt, wodurch ein stärkeres Erwärmen und eine Schädigung durch UV-Licht bei der Schutzfolie und dem darunterliegenden Profil weitgehend vermieden wird. Dadurch wird eine zusätzliche Verbesserung des Gesamtverbundes erzielt.

Der Träger wird unter Anwendung eines üblichen Auftragsverfahrens, beispielsweise mittels einer Rakel, mittels einer Luftbürste, durch Gießen und dgl., mit der erfindungsgemäßen selbstklebenden, redispergierbaren Klebstoffmischung beschichtet. Die auf diese Weise erhaltene Klebefolie dient als Schutzfolie für empfindliche, insbesondere lackierte Oberflächen, vorzugsweise Kunststoffprofile als Oberflächenschutz insbesondere beim Transport, bei der Lagerung und der Verarbeitung bzw. Konfektionierung.

Bei der Komponente (a) der erfindungsgemäßen Klebstoffmischung handelt es sich um eine wäßrige Dispersion mit einem Feststoffgehalt von 40 bis 70 Gew.-%, vorzugsweise von 50 Gew.-%, bezogen auf das Gewicht der Dispersion.

Bei dem $C_4$-$C_{12}$-Alkohol, der zur Herstellung des erfindungsgemäß verwendeten (Meth)Acrylsäureesters eingesetzt wird, handelt es sich um einen geradkettigen oder verzweigten, gesättigten oder ungesättigten, einwertigen, primären, sekundären oder tertiären aliphatischen Alkohol mit 4 bis 12, vorzugsweise 4 bis 6 Kohlenstoffatomen. Besonders bevorzugte Vertreter dieses Alkohols sind n-Butanol und n-Hexanol.

Bei dem in der Komponente (b) verwendeten Polyvinylpyrrolidon handelt es sich um ein solches mit einem k-Wert von 50 bis 60, entsprechend einem mittleren Molekulargewicht von 150 000 bis 170 000, insbesondere von 160 000.

Bei dem erfindungsgemäß zur Plastifizierung des Polyvinylpyrrolidons verwendeten mehrwertigen wasserlöslichen Alkohol handelt es sich vorzugsweise um einen solchen mit 2 bis 4, insbesondere mit 2 freien Hydroxylgruppen, insbesondere um Ethylenglykol, Diethylenglykol oder Propylenglykol.

Das in der Komponente (b) erfindungsgemäß verwendete Polyvinylpyrrolidon kann teilweise oder vollständig durch ein Copolymeres aus einem Vinylmethyläther und Maleinsäureanhydrid mit einem Schmelzbereich von 200 bis 250° C, oder einen Polyvinylmethyläther mit einem k-Wert von 50 bis 60, entsprechend einem Molekulargewicht von 150 000 bis 170 000, insbesondere von 160 000, ersetzt werden. In diesen Fällen vermindert bzw. erübrigt sich der Einsatz des plastifizierenden Alkohols.

Die Bestandteile der Komponente (b) der erfindungsgemäßen Klebstoffmischung, nämlich Polyvinylpyrrolidon, Vinylmethyläther/Maleinsäureanhydrid-Copolymer und Polyvinylmethyläther, sind wasserlöslich und dienen hauptsächlich zur Einstellung der Oberflächenklebrigkeit des erfindungsgemäßen Klebstoffgemisches. Ausserdem sind sie erforderlich zur Erzielung der gewünschten Redispergierbarkeit.

Als anionische oder nicht-ionische Tenside können vorzugsweise Fettalkoholpolyglykoläther, Alkylphenolpolyglykoläther und Ethylendiaminalkoxylat, insbesondere Alkylphenolpolyglykoläther, verwendet werden. Sie unterstützen die Redispergierbarkeit der erfindungsgemäßen Klebstoffmischung. Je höher die Menge der Tenside in der erfindungsgemäßen Klebstoffmischung ist, um so besser und um so schneller funktioniert dieser Prozeß.

Bei den erfindungsgemäß verwendbaren üblichen Zusätzen handelt es sich in der Regel um Fungizide, Verdickungsmittel, Entschäumer, Emulgatoren und Alterungsschutzmittel, wie sie auf diesem Gebiet allgemein üblich sind, insbesondere um ein aliphatisches Amid (Acticid FC ®) als Fungizid, ein Vinylpyrrolidon-Copolymerisat (Collacral VL ®) als Verdicker, aliphatische Kohlenwassersotffe mit einer hydrophoben Siliciumverbindung (Nopco 8034 ®) als Entschäumer, ein Amin-Polyglykol-Kondensat (Nopcowet TB 345 ®) als Emulgator und ein Phenolderivat (Ehatex KA 2299 ®) als Alterungsschutz.

Sie verbessern die Herstellung, Lagerfähigkeit, Handhabbarkeit und Verarbeitbarkeit der erfindungsgemäßen Klebstoffmischung.

Die Erfindung wird durch die folgenden Beispiele näher erläutert, ohne jedoch darauf beschränkt zu sein.

## Beispiel 1

350 Gew.-Teile Wasser (von etwa 95° C) werden so stark gerührt, daß eine trichterförmige Wasseroberfläche entsteht. Durch Beheizung (ein Dampfbad od. dgl.) wird die Temperatur aufrechterhalten. 75 Gew.-Teile eines handelsüblichen Vinylmethyläther/ Maleinsäureanhydrid-Copolymerisats (Schmelzbereich 200 bis 225° C, Molekulargewicht pro Anhydrideinheit 156), beispielsweise Gantrez AN-139 ®, werden langsam in den Wassertrichter gegeben und darin gelöst. Danach wird unter weiterem Rühren auf Raumtemperatur abkühlen gelassen, wobei die eventuell entstandenen Wasserverluste ausgeglichen werden.

Zu dieser Lösung werden 500 Gew.-Teile einer handelsüblichen wäßrigen Dispersion (Vinnapas EA F 60 ®) eines Ethylen/Vinylacetat/Acrylsäureester-Terpolymeren mit einem Feststoffgehalt von 60 Gew.-% unter Rühren zugegeben.

Die sich daran anschließende Zumischung von 10 Gew.-Teilen eines Fettalkoholpolyglykoläthers (handelsübliches Tensid, wie z.B. Marlipal 124 ®) sollte unter langsamem Rühren erfolgen, um eine unnötige Schaumbildung zu vermeiden.

Durch Zugabe von üblichen Zusätzen, beispielsweise 1 Gew.-Teil eines Bakterizids (aliphatische Amidverbindung, wie z.B. Acticid FC ®, 1 Gew.-Teil eines Entschäumers (Kombination aus einer hydrophoben Siliciumverbindung mit Kohlenwasserstoffen und emulgierenden, nicht-ionogen wirkenden Komponenten, wie z.B. Nopco 8034 - E ®) und 0,5 Gew.-Teilen eines Verdickungsmittels (Mischpolymerisats auf Basis von Vinylpyrrolidon, wie z.B.

Collacral VL ® ) wird die gewünschte Verarbeitbarkeit eingestellt.


## Beispiel 2

Zu der in Beispiel 1 hergestellten wäßrigen Lösung des Vinylmethyläther/Maleinsäureanhydrid-Copolymeren werden 400 Gew.-Teile einer handelsüblichen wäßrigen carboxylgruppenhaltigen Dispersion (Lonzacryl XH 500 ® ) aus 65 Gew.-Teilen Ethylhexylacrylat, 5 Gew.-Teilen Acrylsäure und 10 Gew.-Teilen Acrylnitril mit einem Feststoffgehalt von 60 % eingerührt. Nach der Homogenisierung werden 180 Gew.-Teile einer handelsüblichen, wäßrigen, carboxylgruppenhaltigen Dispersion aus Vinylacetat/ n-Butylacetat (Gewichtsverhältnis 50 : 50) (Acronal 500 D ® ) unter Rühren zugegeben. Durch diese Zugabe wird die Filmfestigkeit erhöht und die Oberflächenklebrigkeit des Klebstoffilmes wird eingestellt. Dann wird wie im Beispiel 1 verfahren.


## Beispiel 3

In 400 Teilen Wasser (von höchstens 25° C), die sich in einem Kneter befinden, werden 50 Teile Polyvinylmethyläther mit einem k-Wert von 50 (Handelsprodukt Gantrez M ® ) homogen eingemischt. Dabei darf die Temperatur + 25° C nicht übersteigen. Diese Lösung wird in 400 Gew.-Teile einer wäßrigen Polymerdispersionsmischung des Beispiels 1 unter Rühren eingeführt.

Die anschließende Zugabe von 18 Gew.-Teilen eines Tensids (Alkylphenolpolyglykoläther, wie z.B. Marlophen 89 ® ) sollte wieder unter langsamem Rühren erfolgen, um eine unerwünschte Schaumbildung so gering wie möglich zu halten.

Die gewünschte Verarbeitbarkeit der Klebstoffmischung kann wie in Beispiel 1 angegeben unter Verwendung eines Verdickungsmittels eingestellt werden.

## Beispiel 4

Zu 200 Gew.-Teilen der in Beispiel 2 beschriebenen Vinylmethyl-äther/Maleinsäureanhydrid-Copolymerlösung werden unter Rühren 150 Gew.-Teile der in Beispiel 3 beschriebenen Polyvinylmethyl-ätherlösung zugegeben. Nach der Homogenisierung wird in 350 Gew.-Teilen Polymerdispersion des Beispiels 1 dieses Gemisch der beiden Vorlösungen eingeführt.

Anschließend werden Tenside und übliche Verarbeitungshilfsmittel wie in Beispiel 3 zugegeben.

## Beispiel 5

Eine weiß deckend eingefärbte Hart-PVC-Folie einer Stärke von 50 $\mu$m und einer Breite von 850 mm wird mit der Dispersion nach Beispiel 3, die mit Hilfe eines Zusatzes von 0,5 Teilen Collacral VL $\textregistered$ auf eine Viskosität von 1800 mpa eingestellt worden ist (gemessen mit einer Brookfield-Spindel 3, UpM 50) mit Hilfe eines Rakelmessers beschichtet. Die aufgebrachte Naßbeschichtungsmenge beträgt 70 g/m$^2$ bei einer Bandgeschwindigkeit von 15 m/min.

Anschließend wird die Dispersion in einem Umlufttrockenkanal einer Länge von 20 m bei 70$^\circ$ C getrocknet. Danach wird die Rückseite mit einer Release-Schicht auf Basis Polyoctadecylvinyläther mit Hilfe eines Walzenauftrags versehen. Nach dem Aufwikkeln wird die Rolle auf die gewünschte Breite zugeschnitten und umgerollt.

## Beispiel 6

Ein Fensterprofil aus Hart-PVC wird mit einem lösungsmittelhaltigen Lack auf Acrylatbasis durch indirekten Tiefdruck auf seiner Außenseite beschichtet. Der braun pigmentierte Lack hat nach seiner Trocknung bei 75° C noch einen Rest-Lösungsmittelgehalt von 6,5 %. Anschließend wird die Klebefolie nach Beispiel 5 mit Hilfe eines Rollenauftragsystems auf die noch warme Lackschicht satt aufgetragen.

Das auf diese Weise geschützte Profil wird verschiedenen Prüfungen unterworfen. Bei der künstlichen Bewitterung im Suntest®️ war auch nach 500 h weder ein sichtbarer Abbau des Klebstoffes noch eine Übertragung auf die Lackschicht feststellbar. Dagegen wurden bei konventionellen Schutzfolien schon nach etwa 250 h ein Abbau und eine Übertragung des Klebstoffes festgestellt.

Bei einer Temperaturbelastung von 30 min bei 65° C und weiteren 30 min bei 75° C trat keine Klebstoffübertragung ein, während mit bekannten Schutzfolien bei einer solchen Temperaturbelastung ein etwa 50 %iger Übertrag des Klebstoffes auftrat.

Anwaltsakte 50 516

P a t e n t a n s p r ü c h e :

1. Selbstklebende, redispergierbare Klebstoffmischung, dadurch
g e k e n n z e i c h n e t , daß sie enthält:

a) 40 bis 70 Gew.-%, bezogen auf das Gesamtgewicht der Klebstoffmischung, einer wäßrigen Dispersion mit einem Feststoffgehalt von 40 bis 70 Gew.-% von

   aa) einem Terpolymeren aus

      30 bis 70 Gew.-% eines oder mehrerer Ester von (Meth)-
Acrylsäure und einem Alkohol mit 4 bis 12 Kohlenstoffatomen,

      20 bis 55 Gew.-% Vinyläther oder Vinylester, vorzugsweise Vinylacetat und

      10 bis 30 Gew.-% Ethylen und/oder

   ab) einem Terpolymeren aus

      50 bis 85 Gew.-% eines oder mehrerer Ester von (Meth)-
Acrylsäure und einem Alkohol mit 4 bis 12 Kohlenstoffatomen,

      8 bis 12 Gew.-% (Meth)Acrylnitril und

      2 bis 6 Gew.-% (Meth)Acrylsäure und/oder

   ac) einem Copolymeren aus

      30 bis 70 Gew.-% eines oder mehrerer Ester von (Meth)-
Acrylsäure und einem Alkohol mit 4 bis 12 Kohlenstoffatomen und

      30 bis 70 Gew.-% Vinylacetat;

b) 5 bis 15 Gew.-%, bezogen auf das Gesamtgewicht der Klebstoffmischung, von

   ba) einer Mischung von Polyvinylpyrrolidon mit einem k-Wert
von 50 bis 60 und einem mehrwertigen wasserlöslichen

☎ (089) 98 8272-74      Telekopierer· (089) 98 30 49      Bankkonten: Bayer. Vereinsbank München 453100 (BLZ 700 20. 70.
Telex 524560 Swan d      Kalle Infotec 6350 G· ll – ll:      Hypo-Bank München 4410122850 (BLZ 700 200 11) Swift Code HYPO DE
      Postgiro München 65343-808 (BLZ 700100 80)

Alkohol im Gewichtsverhältnis 95 : 5 bis 70 : 30
und/oder

bb) einem Copolymeren von Vinylmethyläther und Maleinsäureanhydrid mit einem Schmelzbereich von 200 bis 225° C
und/oder

bc) einem Polyvinylmethyläther mit einem k-Wert von 40
bis 60;

c) 0,1 bis 2 Gew.-%, bezogen auf das Gesamtgewicht der Klebstoffmischung, eines anionischen und/oder nicht-ionischen
Tensids;

d) 0,1 bis 5 Gew.-%, bezogen auf das Gesamtgewicht der Klebstoffmischung, übliche Zusätze; und

e) 10 bis 40 Gew.-% Wasser.


2. Klebstoffmischung nach Anspruch 1, dadurch gekennzeichnet,
daß sie enthält:

a) 20 bis 30 Gew.%, bezogen auf das Gesamtgewicht der Klebstoffmischung, einer wäßrigen Dispersion mit einem Feststoffgehalt von 60 Gew.-% eines Ethylen/Vinylacetat/(Meth)
Acrylsäureester-Terpolymeren

b) 20 bis 30 Gew.%, bezogen auf das Gesamtgewicht der Klebstoffmischung, einer wäßrigen Dispersion mit einem Feststoffgehalt von 50 Gew.-% eines carboxylgruppenhaltigen
Vinylacetat/n-Butylacetat-Copolymeren

c) 20 bis 30 Gew.%, bezogen auf das Gesamtgewicht der Klebstoffmischung, einer 25 bis 50 %igen wäßrigen Lösung eines
Polyvinylmethyläthers (k-Wert 50)

d) 0,5 bis 1 Gew.-%, bezogen auf das Gesamtgewicht der Klebstoffmischung, eines Alkylphenolpolyglykoläthers,

e) 0,1 bis 0,3 Gew.-%, bezogen auf das Gesamtgewicht der
Klebstoffmischung, eines aliphatischen Kohlenwasserstoffs
mit hydrophober Si-Verbindung

f) 0,1 bis 0,3 Gew.-%, bezogen auf das Gesamtgewicht der
Klebstoffmischung, eines aliphatischen Amids und

g) 20 bis 30 Gew.-%, bezogen auf das Gesamtgewicht der Klebstoffmischung, Wasser.

3. Klebstoffmischung nach Anspruch 1 oder 2, dadurch gekennzeichnet, daß sie enthält:

a) 24 Gew.-%, bezogen auf das Gesamtgewicht der Klebstoffmischung, einer wäßrigen Dispersion mit einem Feststoffgehalt von 60 Gew.-% eines Ethylen/Vinylacetat/(Meth)Acrylsäureester-Terpolymeren

b) 23 Gew.-%, bezogen auf das Gesamtgewicht der Klebstoffmischung, einer wäßrigen Dispersion mit einem Feststoffgehalt von 50 Gew.-% eines carboxylgruppenhaltigen Vinylacetat/n-Butylacetat-Copolymeren

c) 25 Gew.-%, bezogen auf das Gesamtgewicht der Klebstoffmischung, einer 25 bis 50 %igen wäßrigen Lösung eines Polyvinylmethyläthers (k-Wert 50)

d) 0,7 Gew.-%, bezogen auf das Gesamtgewicht der Klebstoffmischung, eines Alkylphenolpolyglykoläthers

e) 0,3 Gew.-%, bezogen auf das Gesamtgewicht der Klebstoffmischung, eines aliphatischen Kohlenwasserstoffs mit hydrophober Si-Verbindung

f) 0,25 Gew.-%, bezogen auf das Gesamtgewicht der Klebstoffmischung, eines aliphatischen Amids und

g) 26,75 Gew.-%, bezogen auf das Gesamtgewicht der Klebstoffmischung, Wasser.

4. Klebstoffmischung nach einem der Ansprüche 1 bis 3, dadurch gekennzeichnet, daß es sich bei dem Alkohol mit 4 bis 12 Kohlenstoffatomen um n-Butanol oder n-Hexanol handelt.

5. Klebstoffmischung nach einem der Ansprüche 1 bis 4, dadurch gekennzeichnet, daß es sich bei dem mehrwertigen wasserlöslichen Alkohol handelt um Ethylenglykol, Diethylenglykol oder Propylenglykol.

6. Klebstoffmischung nach einem der Ansprüche 1 bis 5, dadurch
   gekennzeichnet, daß sie als Tensid einen Fettalkoholpolyglykoläther, einen Alkylphenolpolyglykoläther und/oder ein
   Ethylendiaminalkoxylat, vorzugsweise einen Alkylphenolpolyglykoläther, enthält.

7. Klebstoffmischung nach einem der Ansprüche 1 bis 6, dadurch
   gekennzeichnet, daß sie als üblichen Zusatz ein Fungizid, ein
   Verdickungsmittel, einen Entschäumer, einen Emulgator und/
   oder ein Alterungsschutzmittel enthält.

8. Selbstklebende Folie zum Schutz empfindlicher Oberflächen,
   insbesondere lackierter Metalloberflächen oder lackierter
   Kunststoffoberflächen, dadurch gekennzeichnet, daß sie aus
   einem üblichen Träger und einer darauf aufgebrachten Schicht
   aus der selbstklebenden, redispergierbaren Klebstoffmischung
   nach einem der Ansprüche 1 bis 7 besteht.

9. Selbstklebende Folie nach Anspruch 8, dadurch gekennzeichnet,
   daß der Träger aus Hart-Polyvinylchlorid, Weich-Polyvinylchlorid, Polyester, Polyethylen, Polypropylen oder damit
   beschichtetem Papier besteht.

10. Selbstklebende Folie, dadurch gekennzeichnet, daß sie auf
    der Trägerunterseite eine Trennschicht (Release-Schicht), vorzugsweise aus einem polymeren Octadecylvinyläther, aufgebracht
    in Form einer Benzinlösung des polymeren Octadecylvinyläthers
    in einer Beschichtungsmenge von 1 bis 2 $g/m^2$ Folie, aufweist.

# EUROPÄISCHER RECHERCHENBERICHT

Nummer der Anmeldung

0155557

EP 85 10 2173

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | FR-A-2 177 919 (BEIERSDORF)<br><br>* Seite 12, Ansprüche 1,3,4; Seite 1, erster Absatz; Seite 5, Zeilen 10-13; Seite 5, Zeilen 26-30 * | 1,4,6, 8 | C 09 J 3/14<br>C 09 J 7/02 |
| A | DE-A-2 142 770 (BEIERSDORF)<br>* Seite 1, erster Absatz; Seite 9, Ansprüche 1-3 * | 1,8 | |
| A | DE-A-1 569 888 (BEIERSDORF)<br>* Seite 12, Ansprüche * | 1,8 | |
| A | GB-A-1 245 410 (KURAMOTO SANGYO) | 1,8 | |
| | | | RECHERCHIERTE SACHGEBIETE (Int. Cl.4)<br><br>C 09 J |

Der vorliegende Recherchenbericht wurde für alle Patentansprüche erstellt.

| Recherchenort | Abschlußdatum der Recherche | Prüfer |
|---|---|---|
| DEN HAAG | 11-06-1985 | GIRARD Y.A. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82